# EUROPÄISCHE PATENTSCHRIFT

(11) **EP 0 363 788 B1**
(45) Veröffentlichungstag und Bekanntmachung des Hinweises auf die Patenterteilung: **31.05.1995**
(21) Anmeldenummer: 89118313.9
(22) Anmeldetag: 03.10.1989
(51) Int. Cl.: F16J 15/56, F16J 15/48, F04B 53/00

(54) **Pumpenaggregat**
Pump unit
Ensemble de pompage

(30) Priorität: 11.10.1988 DE 3834610
(43) Veröffentlichungstag der Anmeldung: 18.04.1990
(73) Patentinhaber: Loegel, Charles, jun., F-67340 Lichtenberg (FR); Durr, Isabelle, F-67340 Lichtenberg (FR); Reichert, Sylvia, 67340 Lichtenberg (FR); Loegel, Patrick, F-67340 Lichtenberg (FR); Schneider, Francine, 67340 Lichtenberg (FR); Loegel, Charles, F-67340 Lichtenberg (FR)
(72) Erfinder: Loegel, Charles, jun., F-67340 Lichtenberg (FR); Durr, Isabelle, F-67340 Lichtenberg (FR); Reichert, Sylvia, 67340 Lichtenberg (FR); Loegel, Patrick, F-67340 Lichtenberg (FR); Schneider, Francine, 67340 Lichtenberg (FR); Loegel, Charles, F-67340 Lichtenberg (FR)
(74) Vertreter: Müller, Hans-Jürgen, Dipl.-Ing.

(56) Entgegenhaltungen:
- DE-A- 3 013 432
- FR-A- 569 191
- US-A- 3 834 715

## Beschreibung

Die Erfindung bezieht sich auf ein Pumpenaggregaten von Förderpumpen hoher Pumpenleistung von mehr als insbesondere 10 l/min bei hohem Förderdruck von mehr als 1000 bar der im Oberbegriff des Anspruchs 1 genannten Gattung.

Derartige Pumpenaggregate sind bereits bekannt. Dabei ist ein Dichtungsring verhältnismäßig großer Axiallänge zwischen zwei massiven Stützringen ebenfalls relativ großer Axiallänge eingesetzt. Bei den schnellen Axialbewegungen des Plunger-Kolbens innerhalb der Zylinderbüchse wird ein solcher Stützring in der Dichtungsstellung mittels einer Wendelfeder an den Dichtungsring gedrückt, wodurch dieser durch Vergrößern seines Außendurchmessers und Verringern seines Innendurchmessers expandiert und sich sowohl am Außenumfang des Kolbens als auch an der Innenwand der Zylinderbohrung dichtend anlegt. Verläßt der Kolben diese Dichtungsstellung, läßt die Vorspannwirkung der Feder nach, so daß der betreffende Stützring sich axial auf dem Kolben wieder zurückbewegt.

Es hat sich jedoch gezeigt, daß vor allem bei hohen Pumpenleistungen in der Größenordnung von dem Mehrfachen von 10 l/min das Pumpenaggregat nicht mehr befriedigend funktioniert, sobald Förderdrucke von mehr als 1000, insbesondere mehr als 1400 bar, verlangt werden.

Der Erfindung liegt die Aufgabe zugrunde, das Pumpenaggregat mit einfachen Mitteln dahingehend zu verbessern, daß es sich auch bei höheren Förderdrucken bis zu 2000 bar und darüber seine Funktionsfähigkeit lange erhält.

Die Erfindung ist im Anspruch 1 gekennzeichnet. In Unteransprüchen sind weitere Ausbildungen beansprucht und in der nachfolgenden Beschreibung sowie in der Zeichnung sind Verbesserungen der Erfindung beschrieben und dargestellt.

Es hat sich gezeigt, daß bei der Verwendung von Paketen dünner Distanzscheiben axial beidseitig des Dichtungsrings auch ohne Verwendung von Vorspannfedern für den Stützring die Funktionsfähigkeit langzeitig voll aufrechterhalten werden kann, obwohl mit wesentlich höheren Förderdrucken als 1400 bar gearbeitet werden kann. Bei der Erfindung wird selbsttätig dafür gesorgt, daß infolge sich aufbauender Druckunterschiede vor allem das der Kolbenstirnseite zugewandte Paket von Dichtungsscheiben selbsttätig seine Axiallänge dadurch vergrößert, daß Dichtungsscheiben dieses Pakets sich unter Bildung kleiner Zwischenräume voneinander lösen.

Bei der Erfindung wird dafür gesorgt, daß infolge der Pakete dünner Dichtungsscheiben die übrigen auf den Kolben aufgefädelten Einsatzstücke axial nur relativ geringfügig auf dem Kolben entlangbewegt werden. Hierdurch wird die Erwärmung des Kolbens gegenüber dem bekannten Pumpenaggregat wesentlich herabgesetzt, ohne daß zusätzliche Kühlkanäle im Kolben bzw. in der Zylinderbüchse mit all ihren Nachteilen angelegt werden müssen.

Es empfiehlt sich, wenn der Dichtungsring und die Distanzscheiben sowie evtl. verwendete weitere Einsatzstücke, wie eine Druckverteilungsbuchse und ein Druckring sowie die Stützringe, verhältnismäßig geringe Axialausdehnung und daher eine verhältnismäßig geringe Masse aufweisen. Hierdurch ist bei den Hin- und Herbewegungen des Kolbens und solcher Einsatzstücke auf diesem weniger mechanische Energie aufzuwenden, so daß auch weniger kinetische Energie entsteht. Die Axialausdehnung dieser Ringe sollte nicht größer sein als deren Differenz zwischen Außen- und Innenradius.

Es empfiehlt sich, Pakete von jeweils einigen einhundert paralleler Distanzscheiben zu verwenden, deren Dicke bevorzugt zwischen 0,1 und 1 mm insbesondere zwischen 0,1 und 0,5 mm, gewählt ist. Dabei sollten die Distanzscheiben aus nichtrostendem Stahl oder Kunststoff bestehen.

Nach einer besonders bevorzugten Ausbildung der Erfindung wird zwischen dem der Kolbenstirnseite zugewandten Paket von Distanzscheiben und dem Dichtungsring eine Druckverteilungsbuchse eingesetzt, welche dazu dient, aufgrund von Druckausgleichskanälen Druck von radial außerhalb dieser Druckverteilungsbuchse zu einer Stirnseite derselben auszugleichen, an der ein Druckring anliegt, welcher mit einem bevorzugt ringförmigen Vorsprung in eine ebenfalls ringförmige Aussparung im Dichtungsring eingreift. Entsteht ein erhöhter Druck an der Kolbenstirnseite, dann pflanzt sich dieser über die Druckausgleichskanäle noch an die im radialen Abstand von der Peripherie des Druckrings befindlichen Teile desselben fort. Der Vorsprung des Druckringes wird in die Aussparung des Dichtungsrings eingedrückt mit der Maßgabe, daß hierdurch eine zusätzliche Spreizwirkung zum radialen Expandieren des Dichtungsrings radial nach außen und radial nach innen entsteht, was die Dichtungsfunktion zusätzlich verbessert. Zu diesem Zweck sollte der Vorsprung im Querschnitt etwas dicker sein als die Aussparung, um den Dichtungsring radial zu spreizen.

Anhand der Zeichnung ist ein Ausführungsbeispiel der Erfindung im folgenden näher erläutert. Dabei zeigen:
- Fig. 1: einen schematischen Teilschnitt durch das Pumpenaggregat;
- Fig. 2a: einen Teilausschnitt aus demselben in der Normalstellung, in der sich der Druckring in Axialabstand vom Dichtungsring befindet, und
- Fig. 2b: eine entsprechende vergrößerte Schnittansicht wie Fig. 2a mit dem Unterschied, daß nach Fig. 2b das Pumpenaggregat die Dichtungsstellung einnimmt.

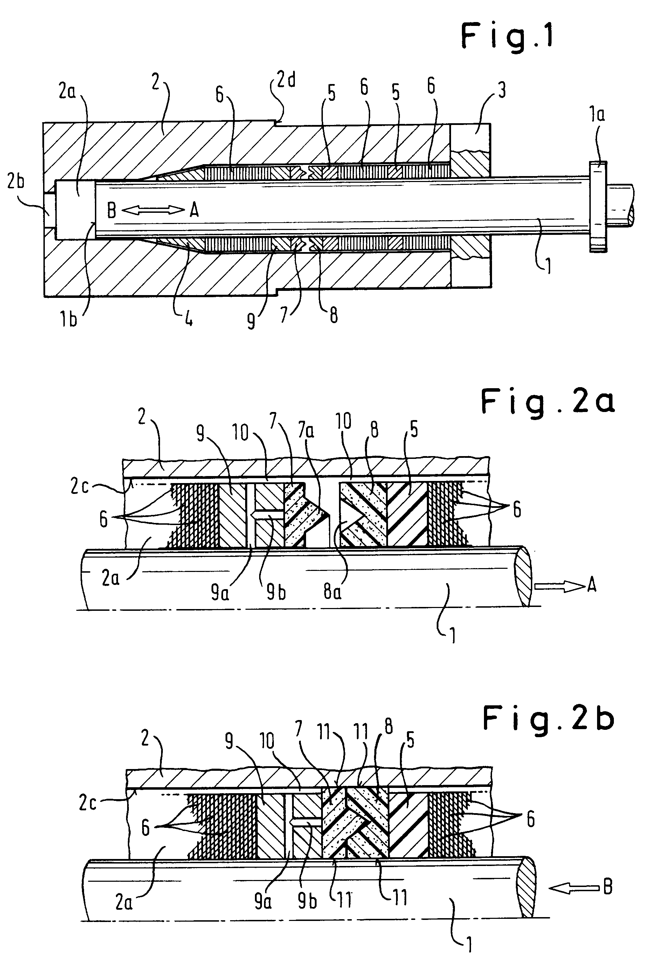

Das Pumpenaggregat weist gemäß Fig. 1 einen Plunger-Kolben 1 mit einer freien Stirnseite 1b an der einen Seite und einem Bund 1a an der anderen Seite auf. Dieser Kolben 1 wird von einem nicht dargestellten Antriebsaggregat in Axialrichtung wie durch Pfeile dargestellt innerhalb der Zylinderbüchse 2 hin- und herbewegt. Die Zylinderbüchse 2 ist mit einer Zylinderbohrung 2a für den Kolben 1 und die Einsatzstücke (4, 5, 6, 7, 8, 9) versehen. In die Zylinderbohrung 2a strömt durch den Durchlaß 2b insbesondere flüssiges Fördergut, beispielsweise Wasser ein, wenn sich der Kolben 1 in Richtung A bewegt. Die Zylinderbüchse 2 weist an ihrem Außenumfang einen bundförmigen Anschlag 2d auf, an den sich ein nicht dargestellter Haltering eine ebenfalls nicht dargestellte Wendelfeder abstützen kann. Nach dem Einsetzen der Einsatzstücke wird die Zylinderbüchse 2 an dem dem Durchlaß 2b abgewandten Stirnende mittels des Verschlußflansches 3 verschlossen, in dem dieser durch nicht dargestellte Schrauben an die betreffende Stirnseite der Zylinderbüchse 2 angeschraubt wird.

In einer Extremstellung schlägt der ringförmige Anschlagkonus 4 an einer konischen Bohrungsfläche im Innenraum der Zylinderbüchse 2 an. Zwischen der zylindrischen Innenwand 2c der Zylinderbüchse 2 und der zylindrischen Mantelfläche des Kolbens 1 sind außer dem Anschlagkonus 4 folgende weitere Einsatzstücke eingesetzt:
In Nachbarschaft zu dem Anschlagkonus 4 befindet sich ein erstes Paket von dünnen Distanzscheiben 6 aus nichtrostendem Stahl mit einer Dicke von 0,1, 0,2 und 0,5 mm. Dieses erste Paket wird von etwa 500 solcher Distanzscheiben 6 gebildet, welche parallel zueinander und im rechten Winkel zur Kolbenachse verlaufen.

Hieran schließt sich die aus Bronze, Kunststoff oder nichtrostendem Stahl bestehende Druckausgleichsbuchse 9 an, welche mit Radialkanälen 9a und Axialkanälen 9b versehen ist, welche Druckausgleichskanäle von der Peripherie derselben zu einer Stirnseite derselben bilden.

An dieser Stirnseite der Druckausgleichsbuchse 9, an der die Axialbohrungen 9b etwa in der Mitte zwischen dem Innenradius und dem Außenradius münden, schließt ein Druckring 7 an, an dessen entgegengesetzter Stirnseite ein im Querschnitt etwa dreieckförmiger Vorsprung 7a - in Form eines Ringes - absteht.

An die den Vorsprung 7a bildende Stirnseite des Druckringes 7 schließt gemäß Fig. 2a und 2b der Dichtungsring 8 an und zwar mit einer eine ebenfalls ringförmige Aussparung 8a aufweisenden Stirnseite, so daß der Vorsprung 7a gemäß Fig. 2b in die Aussparung 8a eingreifen kann und der sich über die Druckausgleichskanäle, d.h. die Radialbohrungen 9a und Axialbohrungen 9b, aufbauende Druck dafür sorgt, daß der Dichtungsring 8 durch den Druckring 7 nicht nur in Axialrichtung unter Druck gesetzt, sondern durch die Vorsprung 7a auch unmittelbar in Radialrichtungen gespreizt bzw. expandiert wird.

Während in der Normalstellung gemäß Fig. 2a sogar ein Abstand zwischen dem Druckring 7 und dem Dichtungsring 8 bestehen kann und ringförmige Zwischenräume 10 zwischen diesen beiden Einsatzstücken und der Innenwand 2c der Zylinderbüchse 2 existieren, verschwinden diese Zwischenräume 10 in der Dichtungsstellung gemäß Fig. 2b, da dort der Druckring 7 nicht nur dicht an den Dichtungsring 8 angedrückt, sondern dieser an den Dichtungsstellen 11 zur Dichtungsbüchse 2 einerseits und zum Kolben 1 andererseits und darüber hinaus auch der Druckring 7 selbst an den entsprechenden Dichtungsstellen 11 in Dichtungsstellungen gebracht werden, da nach dieser Ausbildung der Erfindung auch der Druckring 7 durch Verwendung des gleichen elastisch verformbaren Materials wie der Dichtungsring 8 in Radialrichtungen expandiert.

Im Anschluß an den Dichtungsring 8 ist ein Stützring 5 angeordnet, gefolgt von einem zweiten Paket von Distanzscheiben 6.

Hieran schließt sich in Axialrichtung ein weiterer Stützring 5 und daran ein weiteres, nunmehr drittes Paket solcher blättchenförmiger Distanzscheiben 6 an, deren letzte sich an der inneren Stirnseite des Verschlußflansches 3 abstützt.

Wenn ausgehend von der in Fig. 2a schematisch dargestellten Normalstellung zu pumpendes Fördergut, beispielsweise Wasser, durch den Durchlaß 2b in die Zylinderbohrung 2a einströmt, baut sich auch ein Druck in den freien Räumen zwischen dem Kolben 1 und der Zylinderbüchse 2 auf. Wasser strömt in den vom ersten Paket der Distanzscheiben 6 ausgefüllten Zwischenraum, "fächert" diese unter Bildung kleiner Zwischenräume zwischen den Distanzscheiben 6 auf und bewegt die Druckausgleichsbuchse 9 in Richtung A, wodurch sich auch der Druckring 7 in gleicher Richtung bis zum Anschlag an den Dichtungsring 8 bewegt. Weiteren Druckaufbau besorgt eine Expandierung des Dichtungsrings 8 und ggf. auch des Druckringes 7 in Radialrichtungen zur Bildung der Dichtungsstellen 11 gemäß Fig. 2b.

Wird dagegen das zu pumpende Fördermittel in der Gegenrichtung B wieder aus der Zylinderbüchse durch den Durchlaß 2b herausgesaugt, entsteht eine Art Vakuum in dem von dem ersten Paket der Distanzscheiben 6 gebildeten Raum, so daß die Dichtungsstellung von Fig. 2b verlassen wird und sich der Druckring 7 mit der Druckausgleichsbuchse 9 ebenfalls in Richtung B zurückbewegt und der Dichtungsring 8 sowie der Druckring 7 ihre Normalstellungen unter Bildung der ringförmigen Zwischenräume 10 einnehmen.

Auch die anderen Pakete von Distanzscheiben 6 an der entgegengesetzten Seite des Dichtungsrings 8 haben eine gewisse "Federwirkung", ohne daß die Distanzscheiben 6 aus Federstahl oder dergleichen federelastischem Material gebildet sein müssen.

Das erfindungsgemäße Pumpenaggregat hat sich bereits hervorragend bewährt. Es ist mit wenigen wohlfeilen Einzelteilen herstellbar, es ist mechanisch sehr robust und hält großen dynamischen Wechselspielen auch hoher Frequenz trotz vielstündigem Dauerbetrieb stand, ohne daß sich der Plunger-Kolben unerwünscht hoch erhitzt.

Es empfiehlt sich, wenn auch die anderen Pakete der Distanzscheiben 6 eine Vielzahl von Distanzscheiben 6 in der Größenordnung von mindestens Dutzenden, besser Hunderten aufweisen.

Als Material für den Dichtungsring 8 und evtl. auch den Druckring 7 empfiehlt sich Polyamid insbesondere PA6.6, das mit MOS₂ versehen ist und unter dem Handelsnamen NYLATRON vertrieben wird. Durch bestimmte Zusätze wie Bronze, Graphit, Glasfasern, wird für eine hohe thermische Stabilität gesorgt. Dies gilt vor allem bei Polytetrafluorethylen und Copolymeren aus Tetrafluorethylen und Hexafluorpropylen, die unter dem Handelsnamen TEFLON vertrieben werden. Auch Aramide sind hierfür geeignet. Besondere Vorteile bietet das unter dem Handelsnamen PEEK bekannte Polyetheretherketon. Ferner sind auch Preßmassen auf Polyimidbasis mit Glasfaser und/oder Graphitfüllung, wie das unter dem Handelsnamen KINEL vertriebene Produkt gut für den Dichtungsring 8 und gegebenenfalls den Druckring 7 verwendbar.

Anstelle von Wasser können auch andere Flüssigkeiten, insbesondere Öl, mit dem Pumpenaggregat gefördert werden. Das hydraulische Fördergut ist aber insbesondere ein praktisch nicht kompressibles. Der von der Stirnseite ausgehende sich in Richtung A fortsetzende Druck wirkt zusammen mit dem ersten Paket von Distanzscheiben 6 und der Druckverteilungsbuchse 9 auf den Druckring 7 und den Dichtungsring 8 wie eine Presse, wodurch der Dichtungsring 8 vollständig abdichtet. Fällt der Druck des hydraulischen Förderguts wieder ab, entspannt sich das Paket und die Abdichtung wird aufgehoben (Dichtungsring 8 entspannt sich).

## Patentansprüche

1. Pumpenaggregat von Förderpumpen hoher Pumpenleistung von mehr als etwa 10 l/min bei hohem Förderdruck von mehr als 1000 bar mit einem in einer Zylinderbüchse (2) axial bewegbaren Plunger-Kolben (1), bei dem mindestens ein Dichtungsring (8) in einer Normalstellung einen Zwischenraum zwischen dem Kolben (1) und der Innenwand der Zylinderbüchse (2) frei läßt, in einer Dichtungsstellung dagegen den Zwischenraum unter Anlage sowohl am Kolben (1) als auch an der Innenwand der Zylinderbüchse (2) ausfüllt und mindestens ein Stützring (5) zum Abstützen des Dichtungsrings (8) in der Dichtungsstellung im Zwischenraum zwischen dem Kolben (1) und der Zylinderbüchse eingesetzt ist,
**dadurch gekennzeichnet**,
daß beidseitig des Dichtungsrings (8) je mindestens ein Paket dünner Distanzscheiben (6) auf dem Kolben (1) jedenfalls in der Normalstellung axial bewegbar angeordnet sind.

2. Pumpenaggregat nach Anspruch 1, dadurch gekennzeichnet,
daß an der der Kolbenstirnseite (1b) zugewandten Stirnseite des Dichtungsrings (8) eine Druckverteilungsbuchse (9) auf dem Kolben (1) jedenfalls in der Normalstellung axial bewegbar angeordnet ist, welche Druckausgleichskanäle zwischen dem der Kolbenstirnseite (1b) zugewandten Paket von Distanzscheiben (6) und der diesem Paket zugewandten Stirnseite des Dichtungsrings (8) aufweist.

3. Pumpenaggregat nach Anspruch 1 oder 2, dadurch gekennzeichnet,
daß der Dichtungsring (8) eine ringförmige Aussparung (8a) an einer Stirnseite aufweist, in welche in der Dichtungsstellung ein ringförmiger Vorsprung (7a) eines auf dem Kolben (1) angeordneten Druckrings (7) eingreift.

4. Pumpenaggregat nach Anspruch 3, dadurch gekennzeichnet,
daß der Druckring (7) zwischen dem Dichtungsring (8) und der Druckverteilungsbuchse (9) angeordnet ist.

5. Pumpenaggregat nach einem der vorhergehenden Ansprüche, dadurch gekennzeichnet,
daß an der der Kolbenstirnseite (1b) abgewandten Seite des Dichtungsrings (8) zwei von einem Stützring (5) getrennte Pakete von Distanzscheiben (6) auf dem Kolben (1) angeordnet sind.

6. Pumpenaggregat nach einem der vorhergehenden Ansprüche, dadurch gekennzeichnet,
daß auch der Druckring (7) in der Dichtungsstellung als Dichtungsmittel dient.

7. Pumpenaggregat nach einem der vorhergehenden Ansprüche, dadurch gekennzeichnet,
daß der Dichtungsring (8) und/oder der Druckring (7) aus elastisch verformbarem Material besteht, welches Kunststoff aufweist.

8. Pumpenaggregat nach einem der vorhergehenden Ansprüche, dadurch gekennzeichnet,
daß die Distanzscheiben (6) aus nichtrostendem Stahl und/oder Kunststoff bestehen.

9. Pumpenaggregat nach einem der vorhergehenden Ansprüche, dadurch gekennzeichnet,
daß die Distanzscheiben (6) eine Dicke zwischen 0,1 und 1 mm aufweisen und ringförmig ausgebildet sind.

10. Pumpenaggregat nach einem der Ansprüche 3 bis 9, dadurch gekennzeichnet,
daß Druckausgleichskanäle der Druckverteilungsbuchse (9) an der dem Vorsprung (7a) des Druckrings (7) abgewandten Stirnseite desselben mündende Axialbohrungen (9b) aufweisen.

11. Pumpenaggregat nach Anspruch 10, dadurch gekennzeichnet,
daß Druckverteilungskanäle an der Peripherie der Druckausgleichsbuchse (9) münden und Radialbohrungen (9a) aufweisen, welche mit den Axialbohrungen (9b) in Verbindung stehen.

## Claims

1. A pump unit of feed pumps having a high pumping capacity of more than 10 l/min at a high feed pressure of more than 1000 bar comprising a plunger piston (1) axially movable in a cylinder bush (2) wherein at least one sealing ring (8) leaves an interstice between the piston (1) and the inner wall of the cylinder bush (2) in a normal position, but fills the inter-space by abutting both the piston (1) and the inner wall of cylinder bush (2) in the sealing position and at least one support ring (5) for supporting the sealing ring (8) in the sealing position is inserted in the interstice between the piston (1) and the cylinder bush,
**characterized in**
that at least one pack of thin spacer disks (6) is respectively disposed on the piston (1) on both sides of the sealing ring (8) to be axially movable in the normal position at any rate.

2. A pump unit according to claim 1, characterized in that, on the front side of the sealing ring (8) facing towards the piston front side (1b), a pressure distribution bush (9) is disposed on the piston (1) to be axially movable in the normal position at any rate to comprise pressure compensation channels between the pack of spacer disks (6) facing towards the piston front side (1b) and the front side of sealing ring (8) facing towards this pack.

3. A pump unit according to claims 1 or 2, characterized in that the sealing ring (8) comprises an annular recess (8a) on one front side thereof, which an annular projection (7a) of a thrust collar (7) disposed on the piston (1) engages in the sealing position.

4. A pump unit according to claim 3, characterized in that the thrust collar (7) is disposed between the sealing ring (8) and the pressure distribution bush (9).

5. A pump unit according to any of the preceding claims,
characterized in
that two packs of spacer disks (6) separated by a support ring (5) are disposed on the piston (1) on the side of the sealing ring (8) facing away from the piston front side (1b).

6. A pump unit according to any of the preceding claims,
characterized in
that the thrust collar (7) also serves as a sealing means in the sealing position.

7. A pump unit according to any of the preceding claims,
characterized in
that the sealing ring (8) and/or the thrust collar (7) consist of an elastically deformable material comprising plastic material.

8. A pump unit according to any of the preceding claims,
characterized in
that the spacer disks (6) consist of stainless steel and/or plastic material.

9. A pump unit according to any of the preceding claims,
characterized in
that the spacer disks (6) comprise a thickness between 0.1 and 1 mm and are annularly formed.

10. A pump unit according to any of claims 3 to 9,
characterized in
that pressure compensation channels of the pressure distribution bush (9) comprise axial bores (9b) terminating on the front side of the thrust collar (7) facing away from the projection (7a).

11. A pump unit according to claim 10,
characterized in
that pressure distribution channels terminate on the periphery of the pressure compensation bush (9) and comprise radial bores (9a) to communicate with the axial bores (9b).

## Revendications

1. Ensemble de pompage constitué de pompes de circulation d'une grande puissance, supérieure à environ 10 l/min pour une force de refoulement élevée, de plus de 1 000 bars avec un piston plongeur (1) déplaçable axialement dans une boîte cylindrique (2), dans lequel une bague d'étanchéité (8) au moins libère, dans une position normale, un volume intermédiaire entre le piston (1) et la paroi intérieure de la boîte cylindrique (2), tandis que dans une position d'étanchéité, elle remplit le volume intermédiaire en s'appliquant contre le piston (1) ainsi que contre la paroi intérieure de la boîte cylindrique (2) et au moins une bague d'appui (5), destinée à soutenir la bague d'étanchéité (8) en position d'étanchéité, est insérée dans le volume intermédiaire entre le piston (1) et la boîte cylindrique, caractérisé en ce que sur chacun des deux côtés de la bague d'étanchéité (8) au moins un paquet de rondelles d'écartement (6) minces est monté déplaçable axialement sur le piston (1) , en tout cas en position normale.

2. Ensemble de pompage selon la revendication 1, caractérisé en ce que sur le côté frontal de la bague d'étanchéité (8), tourné vers le côté frontal (1b) du piston, il est monté une douille de répartition de pression (9), déplaçable axialement sur le piston (1), en tout cas en position normale, qui présente des canaux de compensation de pression entre le paquet de rondelles d'écartement (6), tourné vers le côté frontal (1b) du piston, et le côté frontal de la bague d'étanchéité (8), tourné vers ce paquet.

3. Ensemble de pompage selon la revendication 1 ou 2, caractérisé en ce que la bague d'étanchéité (8) présente une découpe (8a) annulaire sur un côté frontal, dans laquelle une saillie annulaire (7a) d'une bague de pression (7), placée sur le piston (1), s'engage en position d'étanchéité.

4. Ensemble de pompage selon la revendication 3, caractérisé en ce que la bague de pression (7) est placée entre la bague d'étanchéité (8) et la douille de répartition de pression (9).

5. Ensemble de pompage selon l'une des revendications précédentes, caractérisé en ce que sur le côté de la bague d'étanchéité (8), tourné à l'opposé du côté frontal (1b) du piston, sont placés sur le piston (1) deux paquets, séparés par une bague d'appui (5), de rondelles d'écartement (6).

6. Ensemble de pompage selon l'une des revendications précédentes, caractérisé en ce que la bague de pression (7) sert aussi de moyen d'étanchéité en position d'étanchéité.

7. Ensemble de pompage selon l'une des revendications précédentes, caractérisé en ce que la bague d'étanchéité (8) et/ou la bague de pression (7) est réalisée dans un matériau élastiquement déformable, qui contient une matière plastique.

8. Ensemble de pompage selon l'une des revendications précédentes, caractérisé en ce que les rondelles d'écartement (6) sont réalisées dans un acier inoxydable et/ou en matière plastique.

9. Ensemble de pompage selon l'une des revendications précédentes, caractérisé en ce que les rondelles d'écartement (6) présentent une épaisseur comprise entre 0,1 et 1 mm et sont en forme d'anneaux.

10. Ensemble de pompage selon l'une des revendications 3 à 9, caractérisé en ce que des canaux de répartition de pression de la douille de répartition de pression (9) présentent des perçages axiaux (9b) débouchant sur le côté frontal de l'anneau de pression (7), tourné à l'opposé de la saillie (7a) de l'anneau de pression (7).

11. Ensemble de pompage selon la revendication 10, caractérisé en ce que des canaux de répartition de pression débouchent à la périphérie de la douille de compensation de pression (9) et présentent des perçages radiaux (9a), qui communiquent avec les perçages axiaux (9b).
